# EUROPEAN PATENT APPLICATION

(11) **EP 4 708 408 A1**
(43) Date of publication of application: **11.03.2026**
(21) Application number: 25196712.1
(22) Date of filing: 19.08.2025
(51) Int. Cl.: H01M 4/86, B01J 21/18, B01J 27/24, C25B 1/02, C25B 1/04, H01M 4/96, H01M 4/90, H01M 4/92

(54) **CARBON-BASED CATALYSTS**

(30) Priority: 20.08.2024 US 202463684882 P
(71) Applicant: Services Pétroliers Schlumberger, 75007 Paris (FR); Schlumberger Technology B.V., 2514 JG The Hague (NL)
(72) Inventor: GARCIA, Javier Rubio, Cambridge, CB3 0EL (GB)
(74) Representative: Schlumberger Intellectual Property Department

(57) **Abstract**

A method for making a carbon-based catalyst involves synthesizing or obtaining particulate precursor material having heteroatoms dispersed in a structure formed by carbon atoms. An exfoliation process is performed on the particulate precursor material to delaminate layers of the particulate precursor material in the form of graphitic flakes or graphene-like flakes. In embodiments, the graphitic flakes or graphene-like flakes can be atomically thin sheets with interstitial and/or edge heteroatoms.

## Description

### CROSS-REFERENCE TO RELATED APPLICATION(S)

The present disclosure claims priority from U.S. Provisional Appl. No. 63/684882, filed on August 20, 2024, entitled "CARBON-BASED CATALYSTS," Attorney Docket No.: IS23.0339 US PSP, herein incorporated by reference in its entirety.

### FIELD

The present disclosure relates to carbon-based catalysts used in fuel cells and other applications.

### BACKGROUND

Polymer-electrolyte-membrane fuel cells (PEMFCs) are an ideal energy conversion system due to zero-emission and high-power density. PEMFCs are one of many promising technologies to enable a transition to a cleaner energy paradigm. The cathode of the PEMFC involves an oxygen reduction reaction (ORR), which reduces molecular oxygen into water. The ORR at the cathode of the PEMFC can present slower reaction kinetics due to different proton-coupled electron transfer steps. Platinum-particle based materials are state-of-the-art catalysts for the ORR at the cathode of a PEMFC due to excellent activity. However, platinum is expensive and adds significant costs to the PEMFC. For this reason, the development of less expensive ORR catalysts is a critical goal to enable the widespread deployment of PEMFCs and hydrogen for clean and effective technology for power generation.

Platinum-particle based materials can also be used as ORR catalysts in reactions happening at high pH, for example, in alkaline electrolyte membrane fuel cells. In this case, the product of the ORR reaction is -OH instead of water.

In this context, ORR catalysts with decreased loading of precious metal components have been reported. Such ORR catalysts typically employ non-precious metal components, such as carbides, oxides, phosphides, or sulfides. Among them, heteroatom-doped carbon, and in particular metal-nitrogen-carbon (M-N-C) materials that include carbon doped with nitrogen and atomically dispersed transition metal atoms (such as iron (Fe), manganese (Mn), nickel (Ni), copper (Cu), and cobalt (Co)) have gathered significant attention due to their robustness, inexpensiveness, and excellent catalytic activities.

Malko et al. developed a method to quantify the number of ORR active sites for Fe-N-C electrocatalysts which simultaneously allowed the determination of the turnover frequency (TOF) of each site. Nature Communications, volume 7, Article number: 13285 (2016). This work allowed the research community to establish a comparison between the catalytic activity of Fe-N-C materials with state-of-the-art platinum-based ORR catalysts. The conclusion was that improvements in the performance of the Fe-N-C ORR catalysts, including enhanced catalytic activity and stability, are mandatory to successfully integrate the Fe-N-C ORR catalysts into PEMFCs, particularly when considering the acidic environment of PEMFCs.

A recent work presented by Mehmood et al. indicated that the development of an adequate synthesis protocol is an important strategy to boost the performance of Fe-N-C catalysts, for instance, by enhancing the number of atomic Fe-sites and the material surface area. Nature Catalysis, 5, 311-323 (2022). In this case, whereas the nature of the active site and its catalytic activity (TOF) remained the same, the ability to increase the density of atomic-iron sites led to a material closer to the requirements for practical PEMFC applications.

### SUMMARY

This summary is provided to introduce a selection of concepts that are further described below in the detailed description. This summary is not intended to identify key features of the claimed subject matter, nor is it intended to be used as an aid in limiting the scope of the claimed subject matter.

The present disclosure provides methods for making carbon-based catalysts for a variety of applications, including reduction of molecular oxygen into water or hydrogen peroxide, evolution/production of molecular oxygen, evolution/production of molecular hydrogen, hydrogen oxidation reactions, carbon dioxide reduction reactions, and chlorine evolution reactions. The methods for making carbon-based catalysts in accordance with the present disclosure can lower the cost for producing effective catalyst material as compared to state-of-the-art platinum-particle-based catalysts.

The present disclosure provides a method for making a carbon-based catalyst, which involves: synthesizing or obtaining particulate precursor material having heteroatoms dispersed in a structure formed by carbon atoms; and performing an exfoliation process on the particulate precursor material to delaminate layers of the particulate precursor material in the form of graphitic flakes or graphene-like flakes.

In embodiments, the graphitic flakes or graphene-like flakes can be atomically thin sheets with interstitial or edge heteroatoms.

In embodiments, the graphitic flakes can have a thickness that includes between 1 and 10 atoms.

In embodiments, the graphene-like flakes can have a thickness that includes 1 or a few atoms.

In embodiments, the particulate precursor material can include nanoparticles.

In embodiments, the particulate precursor material can be synthesized using pyrolysis involving thermal treatment at temperatures in a range between 700 and 2200 degrees Celsius (and possibly between 700 and 1200 degrees Celsius, and/or possibly at or near 900 degrees Celsius in order to increase the yield of the exfoliation process).

In embodiments, the particulate precursor material can have a lattice structure of carbon atoms with the heteroatoms dispersed therein.

In embodiments, the particulate precursor material can include graphene layers each having a two-dimensional lattice structure that includes a single atom thick sheet of carbon crystallized as a honeycomb structure monolayer with the heteroatoms dispersed therein.

In embodiments, the particulate precursor material can be an amorphous structure of carbon atoms with the heteroatoms dispersed therein.

In embodiments, the heteroatoms of the particulate precursor material can include nitrogen atoms and/or metal atoms.

In embodiments, the heteroatoms of the particulate precursor material can include nitrogen atoms without any metal atoms.

In embodiments, the heteroatoms of the particulate precursor material can include non-precious metal atoms, such as iron (Fe), cobalt (Co), nickel (Ni), manganese (Mn), copper (Cu), zinc (Zn), or combinations thereof.

In embodiments, the heteroatoms of the particulate precursor material can include noble metal atoms, such as gold (Au), silver (Ag), or combinations thereof.

In embodiments, the heteroatoms of the particulate precursor material can include platinum group metal atoms, such as platinum (Pt), palladium (Pd), rhodium (Rh), ruthenium (Ru), iridium (Ir), osmium (Os), or combinations thereof.

In embodiments, the heteroatoms of the particulate precursor material can exclude platinum group metal atoms, which include platinum (Pt), palladium (Pd), rhodium (Rh), ruthenium (Ru), iridium (Ir), and osmium (Os).

In embodiments, the particulate precursor material can include graphitic layers comprising graphene or a hexagonal lattice nanostructure of carbons atoms together with interstitial and/or edge heteroatoms.

In embodiments, the interstitial and/or edge heteroatoms of the graphitic layers of the multilayer structures can include nitrogen atoms and/or metal atoms.

In embodiments, the interstitial and/or edge heteroatoms of the graphitic flakes or graphene-like flakes can include nitrogen atoms.

In embodiments, the interstitial and/or edge heteroatoms of the graphitic flakes or graphene-like flakes can further include metal atoms.

In embodiments, the method can further include adding or bonding metal atoms to outer surfaces of the graphitic flakes or graphene-like flakes. The heteroatoms of the particulate precursor material can include nitrogen atoms without any metal atoms dispersed therein.

In embodiments, the method can further include processing the graphitic flakes or graphene-like flakes to form a catalyst layer.

In embodiments, the catalyst layer can be used in an oxygen reduction reaction.

In embodiments, the catalyst layer can be used in an oxygen evolution reaction.

In embodiments, the catalyst layer can be used in a hydrogen evolution reaction.

In embodiments, the catalyst layer can be used in a hydrogen oxidation reaction.

In embodiments, the catalyst layer can be used in a carbon dioxide reduction reaction.

In embodiments, the catalyst layer can be used in a chlorine evolution reaction.

In embodiments, the material can be used as catalyst support in one or more of such reactions.

In embodiments, the carbon-based catalysts can include metal atoms and nitrogen atoms distributed over a carbon surface with controlled and enhanced density of the dispersed metal atoms and nitrogen atoms that actively contributes to improved catalytic activity and stability of the catalyst material.

In other embodiments, the carbon-based catalysts can include nitrogen atoms distributed over a carbon surface with controlled and enhanced density of the dispersed nitrogen atoms that actively contributes to improved catalytic activity and stability of the catalyst.

Furthermore, the methods for making carbon-based catalysts in accordance with the present disclosure can lower the cost for producing the catalyst material as compared to state-of-the-art platinum particle-based catalysts.

### BRIEF DESCRIPTION OF THE DRAWINGS

The subject disclosure is further described in the detailed description which follows, in reference to the noted plurality of drawings by way of non-limiting examples of the subject disclosure, in which like reference numerals represent similar parts throughout the several views of the drawings, and wherein:
FIG. 1 is a flow diagram of a method for making a carbon-based catalyst in accordance with a first embodiment of the present disclosure;
FIG. 2 is a schematic diagram illustrating an example particulate M-N-C precursor material, which can be used in the method of FIG. 1;
FIG. 3 is a schematic diagram of a graphene-like flake exfoliated from particulate M-N-C precursor material in accordance with the first embodiment of the present disclosure of FIG. 1; and
FIG. 4 is a flow diagram of a method for making a carbon-based catalyst in accordance with a second embodiment of the present disclosure.

### DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

In accordance with the various embodiments of the present disclosure, a carbon-based catalyst is made by synthesizing or obtaining particulate metal-nitrogen-carbon precursor material (or particulate nitrogen-carbon precursor material) that includes heteroatoms dispersed in a lattice structure formed by carbon atoms. The particulate precursor material can be synthesized using pyrolysis involving thermal treatment at temperatures in a range between 700 and 2200 degrees Celsius (and possibly between 700 and 1200 degrees Celsius, and/or possibly at or near 900 degrees Celsius). The temperature and duration of the heat treatment can be configured to form graphite-like multilayer structures with good electron conductivity and high density of heteroatoms (i.e., nitrogen with possible metal heteroatoms). The particulate precursor material is subjected to an exfoliation process that generates graphitic flakes or graphene-like flakes from the particulate precursor material. The graphitic flakes or graphene-like flakes can be atomically thin sheets of carbon atoms with metal and nitrogen heteroatoms dispersed therein (e.g., atomically thin M-N-C sheets) or with nitrogen heteroatoms dispersed therein (e.g., atomically thin N-C sheets). The graphitic flakes or graphene-like flakes provide a significant increase in surface area and a high density of heteroatoms, which results in a large number of redox active species that function as a catalyst for different reactions (e.g., oxygen-based reactions or hydrogen-based reactions). The graphene-like flakes can have a thickness that includes 1 or a few atoms. The graphitic flakes can have a thickness that includes between 1 and 10 atoms.

The process can employ a wide range of materials with tunable catalytic activity by selection and/or combination of metal heteroatoms. For example, graphitic flakes or graphene-like flakes with nickel (Ni) and nitrogen heteroatoms can be used as a catalyst for a hydrogen oxidation reaction, while graphitic flakes or graphene-like flakes with iron (Fe) and nitrogen heteroatoms can be used as a catalyst for an oxidation reduction reaction with the ability to compete with platinum-particle-based catalysts in PEMFC applications. The graphitic flakes or graphene-like flakes can be processed onto a substrate (such as an ion conductive material or a porous conductive material) to achieve a highly active catalyst layer.

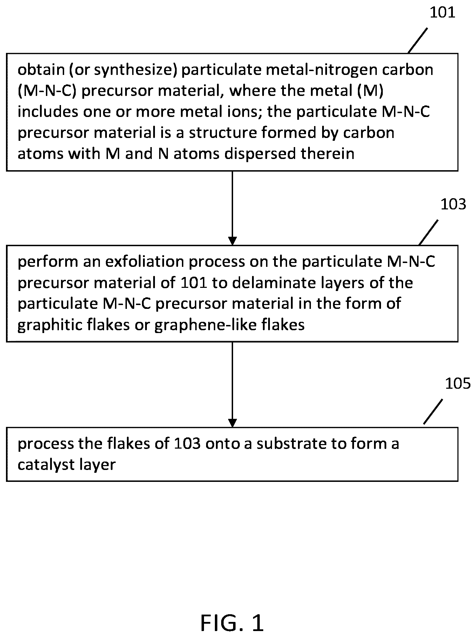

FIG. 1 illustrates a method of making a carbon-based catalyst according to the first embodiment of the present disclosure.

In 101, particulate metal-nitrogen-carbon (M-N-C) precursor material is synthesized or obtained. In embodiments, the metal component of the metal-nitrogen-carbon (M-N-C) precursor material can include non-precious metal atoms, such as iron (Fe), cobalt (Co), nickel (Ni), manganese (Mn), copper (Cu), zinc (Zn) or combinations thereof. In other embodiments, the metal component of the metal-nitrogen-carbon (M-N-C) precursor material can include noble metal atoms, such as gold (Au), silver (Ag); platinum group metal atoms, such as platinum (Pt), palladium (Pd), rhodium (Rh), ruthenium (Ru), iridium (Ir), osmium (Os); or combinations thereof. In still other embodiments, the metal component of the metal-nitrogen-carbon (M-N-C) precursor material can exclude platinum-group metal atoms, which include platinum (Pt), palladium (Pd), rhodium (Rh), ruthenium (Ru), iridium (Ir), osmium (Os).

In embodiments, the particulate metal-nitrogen-carbon (M-N-C) precursor material can be nanoparticles, which are particles with maximal dimensions in a range between 1 to 100 nanometers. In embodiments, the particulate metal-nitrogen-carbon (M-N-C) precursor material can include nanoparticles having a carbon matrix doped with heteroatoms that include nitrogen atoms and metal atoms. In embodiments, the heteroatoms can include non-precious metal atoms, such as iron (Fe), cobalt (Co), nickel (Ni), manganese (Mn), copper (Cu), zinc (Zn) or combinations thereof. In other embodiments, the heteroatoms can include noble metal atoms, such as gold (Au), silver (Ag); platinum group metal atoms, such as platinum (Pt), palladium (Pd), rhodium (Rh), ruthenium (Ru), iridium (Ir), osmium (Os); or combinations thereof. In still other embodiments, the heteroatoms can exclude platinum-group metal atoms, which include platinum (Pt), palladium (Pd), rhodium (Rh), ruthenium (Ru), iridium (Ir), osmium (Os).

In embodiments, the particulate M-N-C precursor material can be fabricated using pyrolysis where a metal-organic assembly undergoes thermal treatment at temperatures in a range between 700 and 2200 degrees Celsius (and possibly between 700 and 1200 degrees Celsius, and/or possibly at or near 900 degrees Celsius in order to increase the yield of the exfoliation process). The temperature and duration of the thermal treatment can be configured such that particulate M-N-C precursor material includes graphite-like multilayer structures with good electron conductivity and high density of heteroatoms (i.e., nitrogen heteroatoms and metal heteroatoms as described herein).

In embodiments, the particulate M-N-C precursor material can have a structure similar to graphitic carbon, which includes graphene layers which are stacked in a roughly parallel fashion, but with random rotations and translations between layers. Each graphene layer is a two-dimensional structure that includes a single atom thick sheet of carbon crystallized as a honeycomb structure monolayer with the heteroatoms dispersed therein.

In other embodiments, the particulate M-N-C precursor material can have a structure similar to amorphous carbon with the heteroatoms dispersed therein. Amorphous carbon is free, reactive carbon that has no crystalline structure. As with other amorphous solids, some short-range order can be observed.

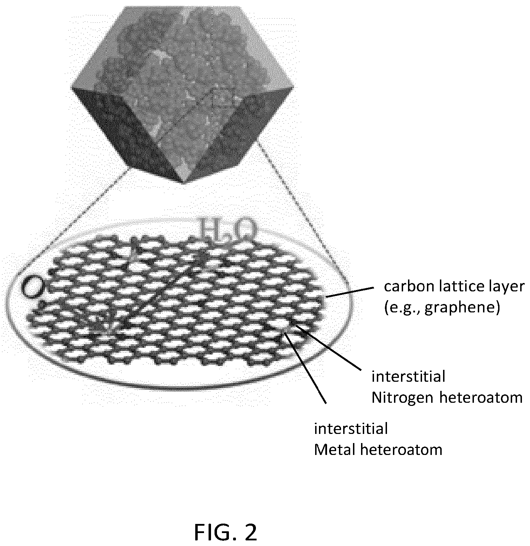

FIG. 2 illustrates an example particulate precursor material of 101 having carbon lattice layers with nitrogen heteroatoms and metal heteroatoms as described herein. Each carbon lattice layer is a two-dimensional structure that includes a single atom thick sheet of carbon crystallized as a honeycomb structure monolayer with interstitial and/or edge metal heteroatoms and interstitial and/or edge nitrogen heteroatoms.

In 103, an exfoliation process is performed on the particulate precursor material of 101 to delaminate layers of the particulate precursor material in the form of graphitic flakes or graphene-like flakes. The graphitic flakes or graphene-like flakes can be atomically thin sheets of carbon atoms with metal and nitrogen heteroatoms dispersed therein (e.g., atomically thin M-N-C sheets). In embodiments, the exfoliation process is configured to break bonds formed by the wan der Waals forces that links the layers of the particulate precursor material of 101 to form atomically thin sheets of carbon atoms arranged in a honeycomb crystal lattice structure with interstitial and/or edge metal heteroatoms and nitrogen heteroatoms dispersed in the lattice structure. The graphitic flakes or graphene-like flakes provide a significant increase in surface area and a high density of the heteroatoms, which results in a large number of redox active species that function as a catalyst for different reactions (e.g., oxygen-based reactions or hydrogen-based reactions).

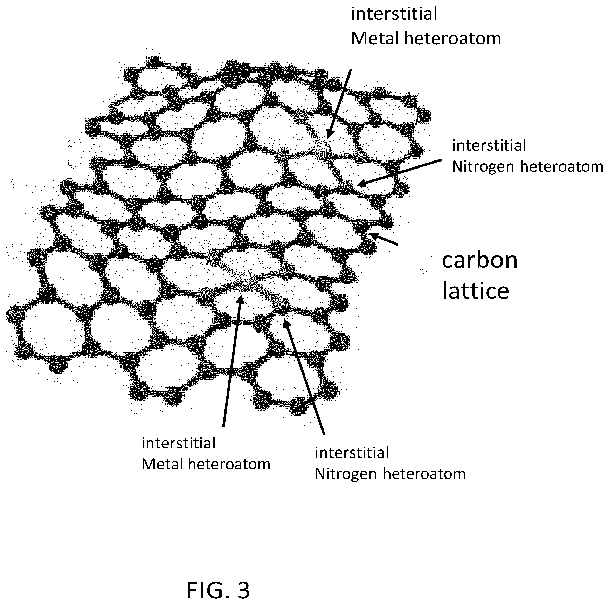

FIG. 3 illustrates an example graphene-like flake formed by the exfoliation process of 103, which includes a two-dimensional carbon lattice layer structure that includes a single atom thick sheet of carbon crystallized as a honeycomb structure monolayer with interstitial and/or edge metal heteroatoms and interstitial and/or edge nitrogen heteroatoms dispersed therein.

In embodiments, the graphitic flakes or graphene-like flakes are generally planar in form (e.g., a nanosheet with a thickness in the range of less than 20 nanometers) with a maximal dimension that corresponds generally to the size of cross-sectional planes through the particulate precursor material of 101.

In embodiments, the exfoliation process of 103 can involve electrochemical exfoliation, which involves intercalation of a cation or anion from an electrolyte under an applied potential. The electrochemical exfoliation mechanisms can depend on the type of potential used: anodic or cathodic. In anodic exfoliation, the accumulation of positive charge at the anode facilitates the intercalation of bulky anions which increase the interlayer spacing between layers of the particulate precursor material, causing expansion and exfoliation of the layers into graphitic flakes or graphene-like flakes. On the other hand, cathodic exfoliation involves the attraction of cations by negative bias at the cathode. Again, these cations are intercalated and open the layers of the particulate precursor material, causing expansion and exfoliation of the layers into graphitic flakes or graphene-like flakes. The chemical exfoliation can employ processes similar to the chemical processes for graphene exfoliation described in Liu et al., "Review on the Effects of Electrochemical Exfoliation Parameters on the Yield of Graphene Oxide," ACS Omega 2022, 7, 33719-33731.

In embodiments, the exfoliation process of 103 can involve liquid-phase exfoliation, which involves immersion of the particulate precursor material into a liquid medium, intercalation of the layers of the particulate precursor material and exfoliation of the layers of the particulate precursor material into graphitic flakes or graphene-like flakes, and stabilization of the graphitic flakes or graphene-like flakes isolated in the liquid medium. The liquid medium can be effective to reduce van der Waals forces' attraction between the graphitic layers of the particulate precursor material. The liquid-phase exfoliation can employ processes similar to the liquid-phase processes for graphene exfoliation described in Moosa et al., "Graphene preparation and graphite exfoliation," Turk J Chem, (2021) 45: 493-519.

In embodiments, the exfoliation process of 103 can involve mechanical exfoliation, which involves application of a normal force or shear force to the particulate precursor material to separate the layers of the particulate precursor material into graphitic flakes or graphene-like flakes. The mechanical exfoliation can employ processes similar to the mechanical processes for graphene exfoliation described in Yi et al. "A review on mechanical exfoliation for the scalable production of graphene," J. Mater. Chem. A, 2015, 3, 11700.

**In** embodiments, the exfoliation process of 103 can involve combinations of the electrochemical exfoliation processes, liquid-phase exfoliation processes and/or mechanical exfoliation processes as described herein.

**In** 105, the graphitic flakes or graphene-like flakes of 103 can be processed onto a substrate to form a catalyst layer. In embodiments, the substrate can be an ion conductive material or porous conductive material. In embodiments, the processing can combine the graphitic flakes or graphene-like flakes of 103 with another two-dimensional structure, such as (among others) graphene, a metal oxide, a double-layered double hydroxide or a metal chalcogenide (such as MoS₂), which enables the graphitic flakes or graphene-like flakes to act as a catalytic site or a catalyst support.

The catalyst layer of 105 can be used for a variety of applications.

**In** embodiments, the catalyst layer of 105 can be used in an oxygen reduction reaction (where molecular oxygen (O₂) is reduced to water or hydrogen peroxide). Details of the oxygen reduction reaction are described in Han et al., "Recent Advances in Single-Atom Electrocatalysts for Oxygen Reduction Reaction," AAAS Research, Volume 2020, Article ID 9512763. The oxygen reduction reaction can be used in energy storage and conversion technologies, such as polymer-electrolyte-membrane fuel cells (PEMFCs) and metal-air batteries, as well as in the synthesis of value-added chemicals.

**In** embodiments, the catalyst layer of 105 can be used in an oxygen evolution reaction (which produces molecular oxygen (O₂)). Details of the oxygen evolution reaction are described in Wan et al., "Mechanistic insight into the active centers of single/dual-atom Ni/Fe-based oxygen electrocatalysts," NATURE COMMUNICATIONS, 2021, 12:5589. The oxygen evolution reaction can be used in energy conversion and storage devices such as electrolyzers, rechargeable metal-air batteries or regenerative fuel cells.

**In** embodiments, the catalyst layer of 105 can be used in a hydrogen evolution reaction (which produces molecular hydrogen (H₂)). Details of the hydrogen evolution reaction are described in Fang et al. "Uncovering near-free platinum single-atom dynamics during electrochemical hydrogen," NATURE COMMUNICATIONS, 2020, 11:1029. The hydrogen evolution reaction can be used in energy conversion and storage devices such as electrolyzers or fuel cells, or for the production of hydrogen for industrial energy applications.

In embodiments, the catalyst layer of 105 can be used in a hydrogen oxidation reaction. Details of the hydrogen oxidation reaction are described in Wang et al., "Nitrogen-doped carbon as a selectively permeable layer to enhance the anti-poisoning ability of hydrogen oxidation reaction catalysts for hydroxide exchange membrane fuel cells," Applied Catalysis B: Environmental 327, 2023, 122442. The hydrogen oxidation reaction can be used in the anode of a polymer electrolyte membrane fuel cell (PEMFC).

In embodiments, the catalyst layer of 105 can be used in a carbon dioxide reduction reaction. Details of the carbon dioxide reduction reaction are described in Fauzi et al., "Recent progress of M-N-C single atom electrocatalysts for carbon dioxide reduction reaction," Next Energy, 1, 2023, 100045. The carbon dioxide reduction reaction can be used in the conversion of carbon dioxide to synthesize one or more value-added chemicals and fuels (such as CH₄, CH₃OH, HCOOH, C₂H₄, C₂H₅OH, CH₃COOH).

In embodiments, the catalyst layer of 105 can be used in a chlorine evolution reaction.

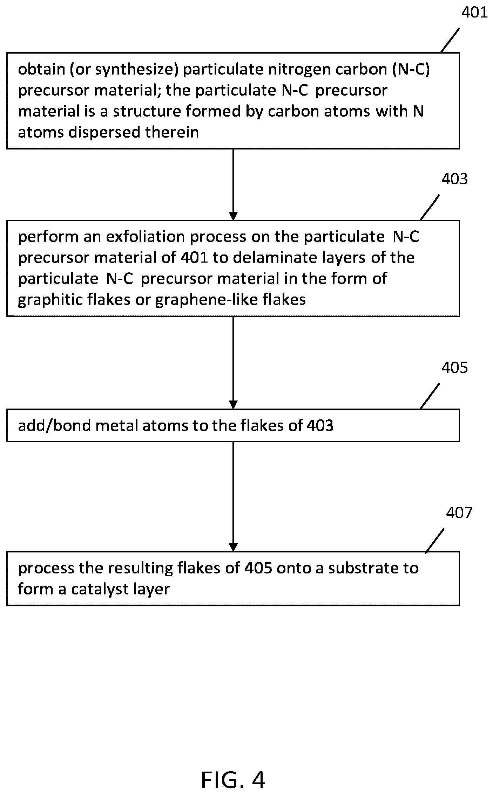

FIG. 4 illustrates a method of making a carbon-based catalyst according to the second embodiment of the present disclosure.

In 401, particulate nitrogen-carbon (N-C) precursor material (without a dispersed metal component) is synthesized or obtained. The particulate N-C precursor material is free of or omits a dispersed metal component. In embodiments, the particulate N-C precursor material can be nanoparticles, which are particles with maximal dimensions in a range between 1 to 100 nanometers. In embodiments, the particulate nitrogen-carbon (N-C) precursor material can include nanoparticles having a carbon matrix doped with heteroatoms that include nitrogen atoms.

In embodiments, the particulate N-C precursor material can be fabricated using pyrolysis where an organic assembly undergoes thermal treatment at temperatures in a range between 700 and 2200 degrees Celsius (and possibly between 700 and 1200 degrees Celsius, and/or possibly at or near 900 degrees Celsius in order to increase the yield of the exfoliation process). The temperature and duration of the thermal treatment can be configured such that particulate N-C precursor material includes graphite-like multilayer structures with good electron conductivity and high density of heteroatoms (i.e., nitrogen heteroatoms).

In embodiments, the particulate N-C precursor material can have a structure similar to graphitic carbon, which includes graphene layers which are stacked in a roughly parallel fashion, but with random rotations and translations between layers. Each graphene layer is a 2-dimensional structure that includes a single atom thick sheet of carbon crystallized as a honeycomb structure monolayer with the heteroatoms dispersed therein.

In other embodiments, the particulate N-C precursor material can have a structure similar to amorphous carbon with the heteroatoms dispersed therein. Amorphous carbon is free, reactive carbon that has no crystalline structure. As with other amorphous solids, some short-range order can be observed.

In embodiments, the particulate N-C precursor material of 401 can have a structure similar to that shown in FIG. 2, which includes carbon lattice layers with interstitial and/or edge nitrogen heteroatoms dispersed therein.

In 403, an exfoliation process is performed on the particulate N-C precursor material of 401 to delaminate layers of the particulate N-C precursor material in the form of graphitic flakes or graphene-like flakes. The graphitic flakes or graphene-like flakes can be atomically thin sheets of carbon atoms with nitrogen dispersed therein (e.g., atomically thin N-C sheets). The graphitic flakes or graphene-like flakes provide a significant increase in surface area and a high density of heteroatoms (nitrogen).

In embodiments, the graphitic flakes or graphene-like flakes of 403 are generally planar in form (e.g., a nanosheet with a thickness in the range of less than 20 nanometers) with a maximal dimension that corresponds generally to the size of cross-sectional planes through the particulate N-C precursor material of 401.

In embodiments, the graphitic flakes or graphene-like flakes of 403 can have a structure similar to that shown in FIG. 3, which includes a two-dimensional carbon lattice layer structure that includes a single atom thick sheet of carbon crystallized as a honeycomb structure monolayer with interstitial and/or edge nitrogen heteroatoms dispersed therein.

In embodiments, the exfoliation process of 403 can involve electrochemical exfoliation, which involves intercalation of a cation or anion from an electrolyte under an applied potential. The electrochemical exfoliation mechanisms depend on the type of potential used: anodic or cathodic. In anodic exfoliation, the accumulation of positive charge at the anode facilitates the intercalation of bulky anions which increase the interlayer spacing between layers of the N-C precursor material, causing expansion and exfoliation of the layers of the N-C precursor material into graphitic flakes or graphene-like flakes. On the other hand, cathodic exfoliation involves the attraction of cations by negative bias at the cathode. Again, these cations are intercalated and open the layers of the N-C precursor material, causing expansion and exfoliation of the layers of the N-C precursor material into graphitic flakes or graphene-like flakes. The chemical exfoliation can employ processes similar to the chemical processes for graphene exfoliation described in Liu et al., "Review on the Effects of Electrochemical Exfoliation Parameters on the Yield of Graphene Oxide," ACS Omega 2022, 7, 33719-33731.

In embodiments, the exfoliation process of 403 can involve liquid-phase exfoliation, which involves immersion of the N-C precursor material into a liquid medium, intercalation of the layers of the N-C precursor material and exfoliation of the layers of the N-C precursor material into graphitic flakes or graphene-like flakes, and stabilization of the graphitic flakes or graphene-like flakes isolated in the liquid medium. The liquid medium can be effective to reduce van der Waals forces' attraction between the graphitic layers of the N-C precursor material. The liquid-phase exfoliation can employ processes similar to the liquid-phase processes for graphene exfoliation described in Moosa et al., "Graphene preparation and graphite exfoliation," Turk J Chem, (2021) 45: 493-519.

In embodiments, the exfoliation process of 403 can involve mechanical exfoliation, which involves application of a normal force or shear force to the N-C precursor material to separate the layers of the N-C precursor material into graphitic flakes or graphene-like flakes. The mechanical exfoliation can employ processes similar to the mechanical processes for graphene exfoliation described in Yi et al. "A review on mechanical exfoliation for the scalable production of graphene," J. Mater. Chem. A, 2015, 3, 11700.

In embodiments, the exfoliation process of 403 can involve combinations of the electrochemical exfoliation processes, liquid-phase exfoliation processes and/or mechanical exfoliation processed as described herein.

In 405, metal atoms are added or bonded to the flakes of 403. In embodiments, the metal atoms can include non-precious metal atoms, such as iron (Fe), cobalt (Co), nickel (Ni), manganese (Mn), copper (Cu), zinc (Zn) or combinations thereof. In other embodiments, the metal atoms can include noble metal atoms, such as gold (Au), silver (Ag); platinum group metal atoms, such as platinum (Pt), palladium (Pd), rhodium (Rh), ruthenium (Ru), iridium (Ir), osmium (Os); or combinations thereof. In still other embodiments, the metal atoms can exclude platinum-group metal atoms, which include platinum (Pt), palladium (Pd), rhodium (Rh), ruthenium (Ru), iridium (Ir), osmium (Os).

In embodiments, the metal atoms can be distributed or dispersed over the lattice of carbon atoms and bind to the nitrogen atoms of the flakes of 403, and thus form a structure similar to that shown in FIG. 3. In this way, the nitrogen groups of the flakes of 403 act like ligands in a coordination chemistry-like reaction.

In 407, the resultant flakes of 405 can be processed onto a substrate to form a catalyst layer. In embodiments, the substrate can be an ion conductive material or porous conductive material. In embodiments, the flakes of 405 can be combined with another two-dimensional structure, such as (among others) graphene, metal oxides, a double--layered double hydroxide or a metal chalcogenide (such as MoS₂), which enables the flakes to either act as a catalytic site or alternatively as a catalyst support.

The catalyst layer of 407 can be used for a variety of applications.

In embodiments, the catalyst layer of 407 can be used in an oxygen reduction reaction (where molecular oxygen (O₂) is reduced to water or hydrogen peroxide). Details of the oxygen reduction reaction are described in Han et al., "Recent Advances in Single-Atom Electrocatalysts for Oxygen Reduction Reaction," AAAS Research, Volume 2020, Article ID 9512763. The oxygen reduction reaction can be used in energy storage and conversion technologies, such as polymer-electrolyte-membrane fuel cells (PEMFCs) and metal-air batteries, as well as in the synthesis of value-added chemicals.

In embodiments, the catalyst layer of 407 can be used in an oxygen evolution reaction (which produces molecular oxygen (O₂)). Details of the oxygen evolution reaction are described in Wan et al., "Mechanistic insight into the active centers of single/dual-atom Ni/Fe-based oxygen electrocatalysts," NATURE COMMUNICATIONS, 2021, 12:5589. The oxygen evolution reaction can be used in energy conversion and storage devices such as electrolyzers, rechargeable metal-air batteries or regenerative fuel cells.

In embodiments, the catalyst layer of 407 can be used in a hydrogen evolution reaction (which produces molecular hydrogen (H₂)). Details of the hydrogen evolution reaction are described in Fang et al. "Uncovering near-free platinum single-atom dynamics during electrochemical hydrogen," NATURE COMMUNICATIONS, 2020, 11:1029. The hydrogen evolution reaction can be used in energy conversion and storage devices such as electrolyzers or fuel cells, or for the production of hydrogen for industrial energy applications.

In embodiments, the catalyst layer of 407 can be used in a hydrogen oxidation reaction. Details of the hydrogen oxidation reaction are described in Wang et al., "Nitrogen-doped carbon as selectively permeable layer to enhance the anti-poisoning ability of hydrogen oxidation reaction catalysts for hydroxide exchange membrane fuel cells," Applied Catalysis B: Environmental 327, 2023, 122442. The hydrogen oxidation reaction can be used in the anode of a polymer electrolyte membrane fuel cell (PEMFC).

In embodiments, the catalyst layer of 407 can be used in a carbon dioxide reduction reaction. Details of the carbon dioxide reduction reaction are described in Fauzi et al., "Recent progress of M-N-C single atom electrocatalysts for carbon dioxide reduction reaction," Next Energy, 1, 2023, 100045. The carbon dioxide reduction reaction can be used in the conversion of carbon dioxide to synthesize one or more value-added chemicals and fuels (such as CH₄, CH₃OH, HCOOH, C₂H₄, C₂H₅OH, CH₃COOH).

In embodiments, the catalyst layer of 407 can be used in a chlorine evolution reaction.

In other embodiments, the operations of 405 can be omitted and the graphitic flakes or graphene-like flakes of 403 can be processed onto a substrate to form a catalyst layer. In this embodiment, the resulting catalyst layer can provide an increased surface area of the catalyst material which enables efficient dispersion of the catalytic material.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words 'means for' together with associated function.

## Claims

1. A method of making a carbon-based catalyst comprising:
synthesizing or obtaining particulate precursor material that includes heteroatoms dispersed in a structure formed by carbon atoms; and
performing an exfoliation process on the particulate precursor material to delaminate layers of the particulate precursor material in the form of graphitic flakes or graphene-like flakes.

2. The method of claim 1, wherein:
the particulate precursor material comprise nanoparticles.

3. The method of claim 1 or 2, wherein:
the particulate precursor material comprises a lattice structure of carbon atoms with the heteroatoms dispersed therein.

4. The method of any one of the preceding claims, wherein:
the particulate precursor material comprises graphene layers each having a two-dimensional lattice structure that includes a single atom thick sheet of carbon crystallized as a honeycomb structure monolayer with the heteroatoms dispersed therein.

5. The method of any one of the preceding claims, wherein:
the particulate precursor material comprises an amorphous structure of carbon atoms with the heteroatoms dispersed therein.

6. The method of any one of the preceding claims, wherein:
the particulate precursor material is synthesized using pyrolysis involving thermal treatment in a temperature range between 700 and 2200 degrees Celsius, wherein:
the thermal treatment is preferably performed in a temperature range between 700 and 1200 degrees Celsius, wherein the thermal treatment is more preferably performed at 900 degrees Celsius.

7. The method of any one of the preceding claims, wherein:
the heteroatoms of the particulate precursor material comprise at least one of: nitrogen atoms and metal atoms or wherein the heteroatoms of the particulate precursor material comprise nitrogen atoms without any metal atoms.

8. The method of any one of the preceding claims, wherein:
the heteroatoms of the particulate precursor material include non-precious metal atoms; and/or
the heteroatoms of the particulate precursor material include noble metal atoms; and/or
the heteroatoms of the particulate precursor material include platinum group metal atoms or exclude platinum-group metal atoms.

9. The method of any one of the preceding claims, wherein:
the particulate precursor material comprises graphene or a hexagonal lattice nanostructure of carbons atoms together with interstitial and/or edge heteroatoms that comprise at least one of nitrogen atoms and metal atoms.

10. The method of any one of the preceding claims, wherein:
the graphitic flakes or graphene-like flakes are atomically thin sheets with interstitial and/or edge heteroatoms.

11. The method of claim 10, wherein:
the heteroatoms of the graphitic flakes or graphene-like flakes comprise nitrogen atoms, wherein the heteroatoms of the graphitic flakes or graphene-like flakes preferably further comprise metal atoms.

12. The method of any one of the preceding claims, further comprising:
adding or bonding metal atoms to the graphitic flakes or graphene-like flakes.

13. The method of any one of the preceding claims, further comprising:
processing the graphitic flakes or graphene-like flakes to form a catalyst layer, wherein the graphitic flakes or graphene-like flakes are preferably processed onto a substrate, wherein the substrate preferably comprises an ion conductive material or a porous conductive material.

14. The method of claim 13, wherein:
the processing combines the graphitic flakes or graphene-like flakes with another two-dimensional structure (such as graphene, a metal oxide, a double-layered double hydroxide or a metal chalcogenide) to enable the graphitic flakes or graphene-like flakes to act as a catalytic site or a catalyst support.

15. The method of claim 13 or 14, wherein:
the catalyst layer is used in at least one of: an oxygen reduction reaction, an oxygen evolution reaction, a hydrogen evolution reaction, a hydrogen oxidation reaction, a carbon dioxide reduction reaction, and a chlorine evolution reaction.
